# FASCICULE DE BREVET EUROPEEN

(11) **EP 2 080 013 B1**
(45) Date de publication et mention de la délivrance du brevet: **19.03.2014**
(21) Numéro de dépôt: 07858623.7
(22) Date de dépôt: 19.10.2007
(51) Int. Cl.: G01N 21/952

(54) **MACHINE THERMOFORMEUSE ASSURANT UN CONTRÔLE ET UN MARQUAGE D'EMBALLAGES**
WÄRMEFORMUNGSMASCHINE FÜR PAKETSTEUERUNG UND -MARKIERUNG
THERMOFORMING MACHINE FOR PACKAGE CONTROL AND MARKING

(30) Priorité: 19.10.2006 FR 0654372
(43) Date de publication de la demande: 22.07.2009
(73) Titulaire: Luceo, 35770 Verne Sur Seiche (FR)
(72) Inventeur: LAPERCHE, Christophe, 35520 La Chapelle Des Fougerets (FR)
(74) Mandataire: Thibault, Jean-Marc
(86) Numéro de dépôt international: PCT/FR2007/052200
(87) Numéro de publication internationale: WO 2008/047060

(56) Documents cités:
- EP-A- 0 691 273
- EP-A- 1 449 770
- WO-A-2004/072626
- WO-A-2005/104016
- DE-A1- 4 330 815
- FR-A1- 2 855 268
- NL-C2- 1 003 290
- US-A- 3 651 465
- US-A- 4 068 448

## Description

La présente invention concerne le domaine technique de l'inspection ou du contrôle optique d'emballages à travers une partie transparente ou translucide dudit emballage contenant des produits de différentes natures.

L'objet de l'invention trouve des applications particulièrement avantageuses, mais non exclusivement, dans le domaine du contrôle des emballages de produits relevant du domaine agroalimentaire, de la pharmacie ou de la cosmétique.

Pour de telles applications, il apparaît le besoin, après le conditionnement des produits, d'assurer un contrôle de l'emballage et/ou du produit emballé afin de vérifier que les emballages et/ou les produits emballés respectent des critères de qualité ou de conformité préalablement définis. A cet effet, il est prévu de mettre en place au bout de la ligne de fabrication, un poste de vision permettant de déceler si les emballages et/ou les produits emballés respectent ou non les critères de conformité requis. Ce poste de vision est associé à un poste de tri généralement automatisé permettant de classer les emballages conformes dans des caisses, tandis que les emballages non-conformes sont retraités afin de remédier au défaut constaté.

Si le contrôle qualité de tels emballages donne satisfaction en pratique, il apparaît une difficulté pour le traitement des emballages considérés comme défectueux car le défaut n'est pas toujours facile à repérer par un opérateur. Cette difficulté de détection est accrue lorsque le poste de vision contrôle plusieurs critères. En effet, il s'avère ainsi nécessaire de vérifier l'ensemble des critères auquel doit respecter l'emballage afin de détecter celui ou ceux non respectés. Dans le même sens, en cas de dysfonctionnement du poste de tri, il n'apparaît pas possible de distinguer les emballages considérés comme conformes par le poste de vision des emballages non-conformes. Cette situation impose d'inspecter de nouveau l'ensemble des emballages, ce qui réduit la cadence de production.

La demande de brevet WO 2004/072626 a proposé une machine d'inspection de produits en vrac à l'aide d'une caméra permettant de vérifier les caractéristiques de produits défilant devant un poste de vision. Ce document prévoit de détecter le nombre d'objets et de le comparer à un nombre lu à partir d'un code barre. Si le nombre de produits ne correspond pas à celui souhaité, une marque est apposée sur l'emballage. Cette machine comporte deux convoyeurs d'entraînement des produits, séparés entre eux pour permettre le positionnement de la caméra d'inspection. Cette machine nécessite un système d'entraînement relativement complexe et onéreux à mettre en oeuvre. De plus, la présence du poste de vision nécessite de rallonger la ligne de convoyage, ce qui conduit à une machine présentant un encombrement important.

La demande de brevet EP-A-1 449 770 décrit une machine thermoformeuse pour le conditionnement de produits par des emballages obtenus à partir d'un film et obturé par un film soudé, la machine comportant successivement selon le sens de transport des emballages assurés par des moyens de convoyage, au moins un poste de conditionnement, un poste de soudage, un poste de marquage et un poste de dégroupage des emballages ainsi qu'un poste pour vérifier la présence d'un article placé entre le poste de soudage et le poste de marquage.

L'objet de l'invention vise à remédier aux inconvénients de l'état de la technique en proposant une machine thermoformeuse pour le conditionnement de produits par emballages, comportant un poste de vision pour le contrôle optique des emballages, conçu pour piloter un poste de marquage afin d'apposer sur les emballages des marques en fonction du respect ou non de critères de conformité préalablement choisis, une telle machine présentant des moyens de convoyage simple, n'augmentant pas l'encombrement de la machine.

Pour atteindre un tel objectif, la machine thermoformeuse pour le conditionnement de produits par des emballages obtenus à partir d'un film et obturés par un film soudé, la machine comportant successivement, selon le sens de transport des emballages assuré par des moyens de convoyage, au moins un poste de conditionnement, un poste de soudage, un poste de marquage et un poste de dégroupage des emballages.

Selon l'invention, un poste de vision est placé entre le poste de soudage et le poste de marquage, le poste de vision comportant des moyens de prise d'images de l'emballage, synchronisés sur l'avance des moyens de convoyage et des moyens pour piloter le poste de marquage, de manière qu'après avoir déterminé si les emballages respectent ou non des critères, le poste de vision commande le poste de marquage afin d'apposer sur les emballages des marques en fonction du respect ou non des critères, et en ce que les moyens de convoyage assurent le transport groupé des emballages par les deux bords longitudinaux des deux films superposés.

Selon une caractéristique préférée de réalisation, le poste de vision assure le contrôle optique pour un groupe d'emballages avançant d'un pas déterminé en fonction du conditionnement des produits.

Par exemple, le pas d'avance de la machine est égal à une longueur comportant une série d'emballages.

Selon une variante de réalisation, le poste de marquage assure le marquage d'au moins la date limite de consommation et des marques en fonction du respect ou non des critères.

Selon une autre caractéristique avantageuse de réalisation, le poste de marquage appose sur les emballages, des marques relevant de une ou de plusieurs catégories différentes correspondant chacune à des critères différents à respecter.

Par exemple, le poste de marquage assure le marquage sur les emballages, en tant qu'informations, au moins des dates limites de consommation à proximité desquelles sont apposées les marques significatives du respect ou non des critères.

Avantageusement, le poste de marquage appose des marques codées non directement compréhensibles en l'absence d'une table de correspondance entre lesdites marques codées et le respect ou non des critères.

Par exemple, le poste de marquage appose en tant que marques codées, des traits de plus ou moins grandes longueurs.

Selon un autre exemple, le poste de marquage appose des marques directement compréhensibles.

Selon un exemple préféré d'application, le poste de vision assure un contrôle optique des emballages de manière à déterminer si les emballages respectent ou non en tant que critères, la présence d'intrus dans les soudures de l'emballage, l'aspect du produit, l'aspect de l'emballage et/ou la présence du produit à l'intérieur de l'emballage.

De préférence, le poste de marquage assure pour chaque pas d'avance des emballages, un contrôle optique des emballages de manière à attribuer à chaque emballage, un code représentatif de sa position.

Avantageusement, le poste de marquage est suivi d'un poste de tri des emballages à partir des marques apposées sur les emballages et en fonction du respect ou non des critères.

Par exemple, le poste de tri comporte des moyens de prises d'images des emballages pour détecter au moins les marques, les dates limites de consommation et la position des emballages, ces moyens de prises d'images pilotant un système de préhension des emballages adapté pour placer les emballages conformes dans une caisse de conditionnement et pour permettre aux emballages non-conformes de suivre une voie de traitement.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est un synoptique permettant d'illustrer le principe de l'objet de l'invention.
La **Figure 2** est une vue schématique d'un exemple d'une thermoformeuse mettant en oeuvre l'objet de l'invention.
La **Figure 3** est une vue en perspective partielle d'une thermoformeuse intégrant un poste de vision conforme à l'invention.
La **Figure 4** est une vue prise sensiblement selon les lignes IV-IV de la **Fig. 3****.**
La **Figure 5** est une vue schématique illustrant le principe de fonctionnement de la machine thermoformeuse illustrée aux **Fig. 2** à **4****.**
La **Figure 6** est un schéma illustrant différentes caractéristiques de l'objet de l'invention.

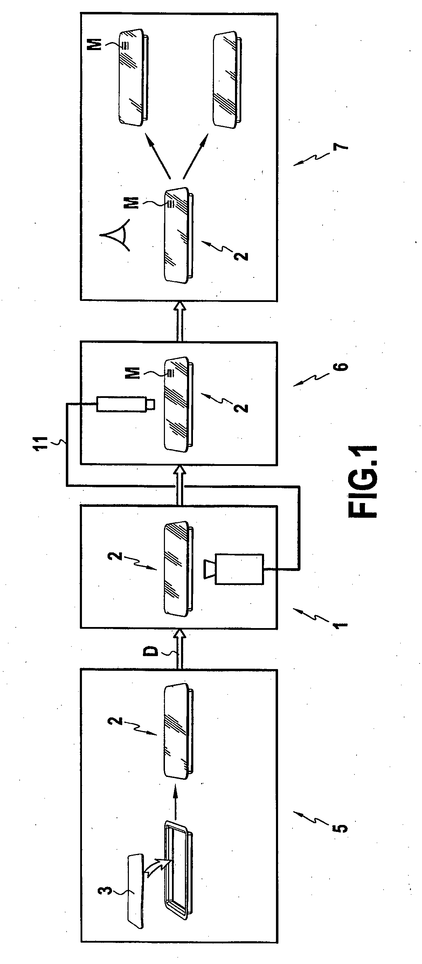

Tel que cela ressort plus précisément de la **Fig. 1****,** l'objet de l'invention concerne un poste de vision **1** adapté pour assurer un contrôle ou une inspection optique d'emballages **2** de produits **3** sur une ligne de conditionnement de tout type connu. D'une manière générale, une ligne de fabrication ou de conditionnement comporte successivement selon une direction d'avance ou de défilement **D** des emballages **2** :
- un poste de conditionnement **5** des produits **3** à l'intérieur d'emballages **2,**
- un poste de marquage **6** d'informations sur les emballages **2,**
- et un poste **7** de tri des emballages en fonction du respect ou non de critères de qualité ou de conformité:

Conformément à l'invention, le poste de vision **1** est disposé en amont du poste de marquage **6** et plus précisément entre le poste de conditionnement **5** et le poste de marquage **6.**

Le poste de conditionnement **5** est adapté à la nature des produits **3** à emballer et des emballages **2** utilisés. Les produits **3** à emballer peuvent relever par exemple du domaine alimentaire, pharmaceutique ou cosmétique. L'emballage **2** présente toutes formes appropriées et se trouve réalisé en un matériau permettant une inspection par prise d'images. A cet égard, l'emballage **2** comporte au moins un côté transparent à travers lequel est réalisée l'inspection optique, associé à un côté opposé transparent ou opaque.

Le poste de vision **1** conforme à l'invention comporte notamment des moyens de prise d'images des emballages. Ces images sont traitées afin de déterminer si les emballages respectent ou non des critères de qualité ou de conformité **C.** Il est à noter que le traitement d'images peut intéresser l'emballage lui-même et/ou le produit emballé. Ainsi, le contrôle des critères de qualité ou de conformité peut concerner l'emballage et/ou le produit emballé. A titre d'exemple, il peut être prévu de contrôler la présence ou non du produit à l'intérieur de l'emballage, l'aspect ou les dimensions du produit, les caractéristiques de fermeture de l'emballage, etc.

Le poste de vision **1** comporte également des moyens **11** adaptés pour piloter le poste de marquage **6** de manière que ce dernier appose sur les emballages des marques ou des signes distinctifs **M** en fonction du respect ou non des critères préalablement définis. De préférence, dans le cas où un critère n'est pas satisfait, une marque **M** est apposée sur l'emballage **2.** Bien entendu, il peut être envisagé d'apposer une marque **M** sur chaque emballage **2** lorsque ce dernier respecte le critère préalablement défini. Dans ce cas, seul l'emballage non-conforme ne comporte pas une telle marque. Cette dernière variante de réalisation permet de vérifier que l'opération d'inspection a été correctement réalisée.

Selon une caractéristique avantageuse de réalisation, il peut être prévu d'apposer sur les emballages **2,** des marques relevant de plusieurs catégories différentes correspondant chacune à des critères différents à respecter. Par exemple, si le poste de vision **1** a pour objet d'examiner si deux critères sont respectés tels que la présence de produits et l'intégrité de l'emballage par exemple, le poste de marquage appose deux types de marques **M** différentes sur l'emballage correspondant chacun à un critère différent. Bien entendu, les marques apposées peuvent être réalisées de toute manière appropriée.

Selon une variante préférée de réalisation, les marques ou les signes distinctifs apposés **M** sont codés de manière à être non directement compréhensibles par une personne en l'absence d'une table de correspondance entre lesdites marques codées et les critères. En tant que marque codée **M,** il peut être prévu d'apposer des traits de plus ou moins grande longueur en différents endroits caractéristiques de l'emballage comme cela sera expliqué dans la suite de la description. Bien entendu, les marques **M** apposées peuvent être apposées en clair, c'est-à-dire être directement compréhensibles par une personne.

Le poste de marquage **6** est suivi d'un poste de tri **7** des emballages en fonction du respect ou non des critères de qualité ou de conformité. Le poste de tri **7** permet de séparer les emballages conformes des emballages non-conformes en fonction des marques **M** préalablement apposées. Ce tri, qui peut être effectué manuellement ou de manière automatique, permet d'une part, de placer en caisse les emballages conformes afin d'assurer leur expédition et d'autre part, le traitement des emballages défectueux.

Le poste de vision **1** tel que décrit ci-dessus trouve une application dans le conditionnement de produits alimentaires à l'intérieur de barquettes fermées par un film soudé. Le poste de vision **1** est adapté pour être mis en oeuvre sur une ligne de conditionnement mettant en oeuvre une machine thermoformeuse. L'intégration d'un poste de vision **1** dans une machine thermoformeuse est particulièrement adaptée pour déterminer si les emballages respectent ou non en tant que critères, la présence d'intrus dans les soudures de l'emballage, l'aspect du produit, l'aspect de l'emballage et/ou la présence du produit à l'intérieur de l'emballage. Ainsi, le poste de vision **1** est particulièrement adapté pour inspecter des emballages de produits de charcuterie, de fromagerie, de traiteur ou tout autres produits.

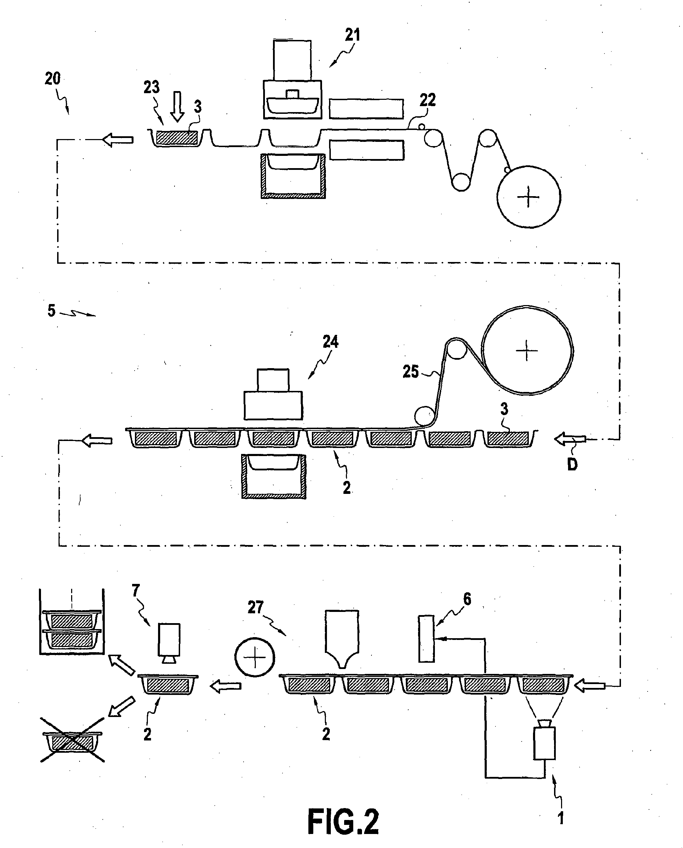

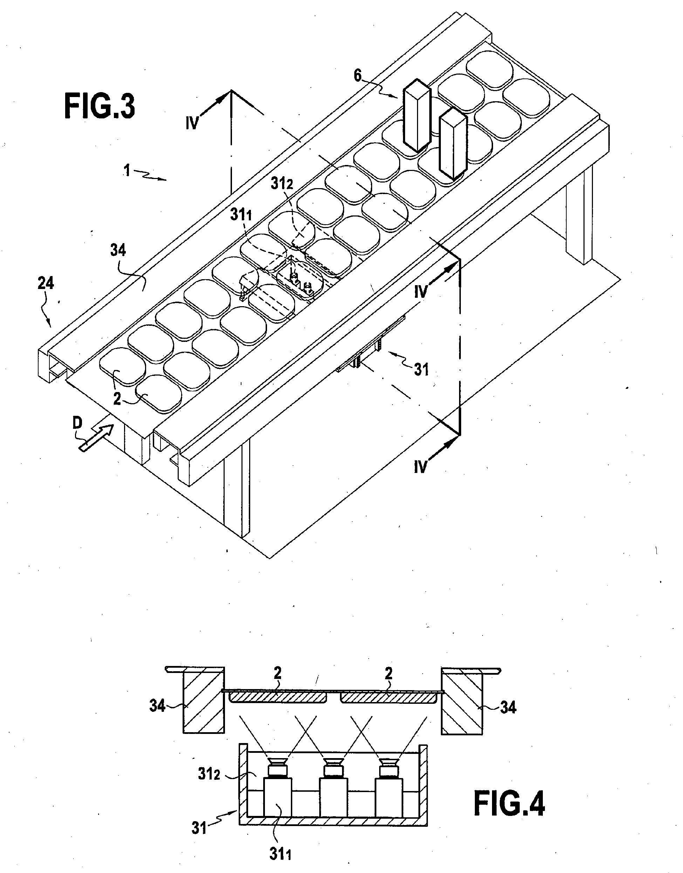

Les **Fig. 2** à **5** illustrent une machine thermoformeuse **20** conforme à l'invention intégrant un poste de vision **1** interposé entre le poste de conditionnement **5** et le poste de marquage **6.** Les postes de conditionnement **5** et de marquage **6** de la machine thermoformeuse **20** seront décrits de manière succincte car ils sont bien connus de l'homme du métier. La machine thermoformeuse **20** comporte ainsi un poste **21** de thermoformage des emballages **2** obtenus à partir d'un film **22** en matière plastique. Dans l'exemple illustré, le poste **21** assure la formation sur la largeur du film **22,** de deux emballages **2** côte à côte tels que des barquettes par exemple de sorte que les emballages **2** s'étendent selon deux rangées comme cela apparaît clairement sur les **Fig. 3** et **4****.** Bien entendu, le poste de thermoformage **21** peut réaliser les emballages selon diverses configurations ou positions différentes de celles illustrées. Les barquettes ainsi réalisées sont acheminées jusqu'à un poste de remplissage **23** où les produits **3** sont placés dans les emballages **2.** Il est à noter que les barquettes sont déplacées de manière groupée dans la mesure où toutes les barquettes sont reliées les unes aux autres par le film **22.** L'avance du film dans le sens de défilement **D** par tous moyens appropriés permet d'acheminer successivement les emballages **2** aux différents postes de la machine thermoformeuse.

Les barquettes ainsi remplies sont acheminées jusqu'à un poste de soudure **24** adapté pour fermer les emballages à l'aide d'un film de fermeture **25** venant sur le dessus des barquettes. Avant la fermeture des emballages **2,** le vide est réalisé à l'intérieur de la barquette avant l'introduction d'un gaz inerte. Le poste de soudure **24** assure la fermeture étanche des emballages par la réalisation d'un cordon de soudure sur toute la périphérie de chaque emballage **2.** Les emballages fermés **2** sont ensuite acheminés jusqu'au poste de vision **1** conforme à l'invention, pour être ensuite amenés au poste de marquage **6** avant d'arriver à un poste de découpe **27** permettant d'individualiser les emballages **2.**

De manière classique, le poste de marquage **6** comporte une ou plusieurs imprimantes à jet d'encre et permet d'apposer sur les emballages, des informations de toute nature. Selon une caractéristique avantageuse de réalisation, le poste de marquage **6** appose en particulier la date limite de consommation (DLC) des produits **3** emballés.

Tel que cela ressort plus précisément des **Fig. 3** et **4****,** le poste de vision **1** comporte des moyens de prise d'images **31** d'au moins de la partie de l'emballage qui permet de déterminer si l'emballage respecte ou non les critères de conformité choisis. Selon une caractéristique préférée de réalisation, les moyens **31** prennent des images des cordons de soudure des emballages **2** afin de déceler la présence éventuelle d'intrus ou de corps étrangers dans ces cordons de soudure. La présence d'intrus dans les cordons de soudure thermoscellés conduit à une altération d'une part, de la qualité de la soudure du point de vue de l'étanchéité et d'autre part, de l'aspect esthétique conféré au produit et à l'emballage.

D'une manière classique, la qualité des cordons de soudure peut être contrôlée à partir du dos ou de la face verso des emballages dans la mesure où cette face verso est transparente et le film de fermeture **25** qui forme la face recto présente généralement un caractère opaque. Avantageusement, dans une machine thermoformeuse, les emballages **2** sont convoyés entre le poste de soudure **24** et le poste de marquage **6,** avec la face recto dirigée vers le haut et la face verso dirigée vers le bas. De plus, il est à noter que les emballages **2** sont transportés entre les postes de soudure **24** et de marquage **6,** par des moyens de convoyage **34** laissant dégager la face verso des emballages. En effet, tel que cela ressort des **Fig. 3** et **4****,** les moyens de convoyage **34** maintiennent les emballages **2** par les deux bords longitudinaux des deux films superposés **22, 25.** Par exemple, ces moyens de convoyage **34** comportent deux jeux de glissières superposées entre lesquelles sont engagés les bords longitudinaux des films **22, 25.** Ces moyens de convoyage **34** sont pilotés pour présenter un pas d'avance déterminé comme cela sera expliqué dans la suite de la description.

Les moyens de prise d'images **31** sont donc placés en dessous des emballages, entre les postes de soudure **24** et de marquage **6** de manière à contrôler la face verso de l'emballage. Bien entendu, il est clair qu'il peut être envisagé d'inspecter la face recto de l'emballage si cette face constituée par le film **25** présente un caractère transparent. L'inspection de la face recto de l'emballage est possible car les moyens de convoyage **34** laissent dégager également la face recto de l'emballage.

Par exemple, les moyens de prise d'images **31** comprennent au moins une et dans l'exemple illustré trois caméras **31₁** disposées transversalement par rapport au sens de déplacement **D** des emballages. Ces moyens de prise d'images **31** comprennent également deux sources d'éclairage **31₂** disposées de part et d'autre des caméras et permettant d'éclairer la face verso des emballages. Ce poste de détection **1** comporte également des moyens de traitement des images prises afin de déterminer si les emballages respectent ou non les critères de conformité préalablement choisis. Ces moyens de traitement sont reliés aux moyens **11** qui transfèrent au poste de marquage **6,** les informations nécessaires pour que ce dernier appose, sur les emballages, les marques M en fonction du résultat des traitements d'images.

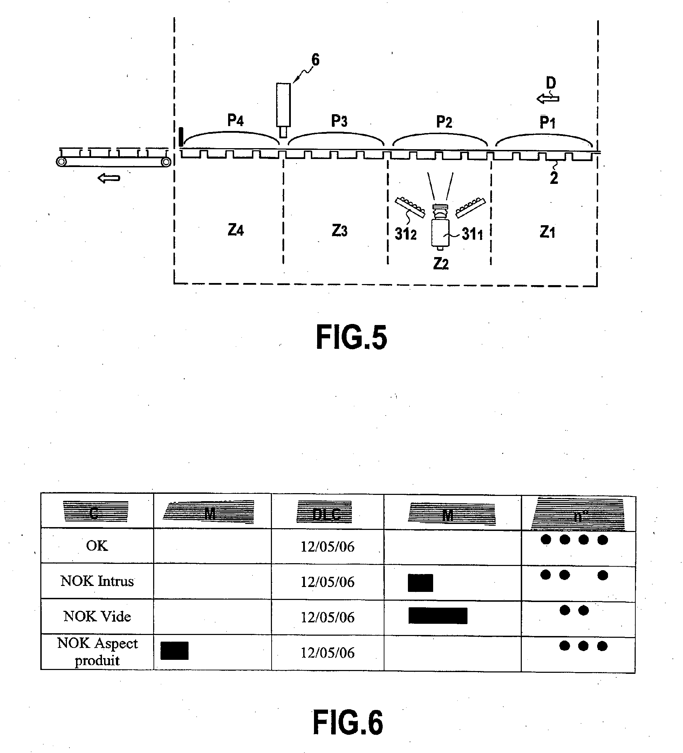

La **Fig. 5** permet de mieux comprendre le fonctionnement d'une machine thermoformeuse **20** telle que décrite ci-dessus. Il doit être noté qu'une machine thermoformeuse **20** de ce type fonctionne avec un pas d'avance dépendant notamment des opérations de soudure et de thermoformage. Dans l'exemple illustré, il est considéré que le pas d'avance **P₁, P₂, P₃**, **P₄** de la machine est égal à une longueur comportant quatre emballages **2** de sorte que chaque poste de la machine effectue son opération simultanément sur huit emballages. Bien entendu, chaque poste de la machine est apte à effectuer son opération sur un nombre différent d'emballages, égal à **n** au sens général. La durée du traitement ou de pause entre deux pas d'avance des emballages correspond à la durée de la plus longue des opérations de la machine thermoformeuse **20.** Ainsi, les moyens de prise d'images **31** sont synchronisés sur l'avance des moyens de convoyage **34.**

Après le remplissage simultané par les produits **3** des emballagés **2** (huit dans l'exemple illustré), ces emballages **2** sont transférés d'un pas **P₁** dans la zone de soudure **Z₁.** Après un temps de traitement déterminé, les emballages sont transférés dans une zone de vision **Z₂,** dans laquelle est placé le poste de vision **1.** Les images sont prises à la volée lors du défilement des emballages **2** devant les caméras **31₁**. En d'autres termes, la prise des images est synchronisée avec le pas d'avance des moyens de convoyage **34.** Les emballages sont ensuite déplacés d'un pas **P₃**, dans une zone de marquage **Z₃**. Au terme de ce pas d'avance, les images prises sont traitées pour déterminer si les emballages respectent ou non les critères définis. Le résultat de ce traitement est transmis au poste de marquage **6** pour permettre d'apposer les marques **M** sur les emballages concernés. Au cours du pas d'avance **P₄,** les emballages **2** sont déplacés pour défiler devant le poste de marquage **6.** Le poste de marquage **6** est adapté pour disposer sur les emballages les marques **M** correspondant au respect ou non des critères choisis pour les emballages et éventuellement des informations à caractère général telles que la **DLC.**

Les emballages défilent ensuite devant le poste **27** de découpe transversal et longitudinal permettant d'individualiser les emballages **3** en vue de leur acheminement vers le poste de tri **7.** De manière classique, le poste de tri **7** comporte un système de contrôle optique permettant de vérifier que les emballages sont conformes ou non. Ce système de contrôle optique vérifie notamment la présence ou non des marques **M.** Il est à noter que ce système de contrôle optique est à même de contrôler d'autres caractéristiques de l'emballage.

Selon un exemple préféré de réalisation, le système de contrôle optique comprend au moins un système de prise d'images apte à détecter la présence ou l'absence des marques **M.** De plus, ce système de contrôle optique peut être adapté pour discerner le type de critères non respectés. Ce système de contrôle optique est avantageusement couplé à un système de manutention tel un robot permettant de prendre les emballages non défectueux afin de les mettre dans des caisses d'expédition. Les emballages défectueux, à savoir ceux comportant une marque **M** dans l'exemple illustré sont traités pour remédier à leur défaut. A cet égard, le robot de manutention peut être piloté par le système de contrôle optique pour séparer les emballages défectueux en fonction de la nature de leur défaut. Dans l'exemple décrit ci-dessus, le tri des emballages est effectué de manière automatique, mais il est clair que l'opération de tri peut être réalisée par des opérateurs qui visualisent directement les emballages défectueux ou conformes par la présence ou l'absence des marques **M.** Le poste de tri peut comporter ainsi un système d'éjection des emballages défectueux.

Selon une caractéristique préférée de réalisation illustrée à la **Fig. 6****,** les marques **M** sont apposées à proximité de la date limite de consommation **(DLC).** Selon une autre caractéristique préférée, les marques **M** sont codées pour être non directement compréhensible par une personne qui ne dispose pas d'une table de correspondance entre les marques **M** et les critères choisis. Par exemple, il peut être prévu de représenter les marques par des traits de différentes longueurs.

Ainsi, dans le cas où l'un des critères contrôlés concerne la présence ou l'absence d'intrus dans les cordons de soudure, il est choisi de ne pas apposer de marque **M** à droite de la **DLC** si l'emballage est correct, alors que si le poste de vision **1** détecte un défaut lié à la présence d'un intrus dans le cordon de soudure, une marque **M** est apposée à droite de la **DLC.** Par exemple, il peut être choisi un trait court correspondant à ce type de défaut. Dans le cas où le poste de vision **1** vérifie la présence ou non des produits à l'intérieur des emballages, la détection d'un emballage vide conduit le poste de marquage **6** à apposer une marque **M** à droite de la **DLC** différente de la marque **M** caractérisant un intrus dans les soudures. Par exemple, il peut être choisi un trait long pour caractériser un tel défaut d'absence de produit. Dans le même sens, si le poste de vision **1** vérifie l'aspect du produit emballé, il peut être prévu, en cas du non respect des règles considérant le produit comme acceptable, d'apposer, à gauche de la **DLC,** un trait court signifiant un produit emballé défectueux.

Il ressort de l'exemple ci-dessus que la présence ou l'absence de marques **M** permet de caractériser le caractère conforme ou non-conforme des emballages et/ou des produits emballés. Par ailleurs, la position de ces marques et/ou leur présentation permet de visualiser directement le type de caractère non respecté, en connaissant la table de correspondance entre les types de défauts et les marques. Bien entendu, il peut être envisagé d'autres types de marques ou de signes pour signaler des emballages défectueux. Il peut être prévu d'avoir recours à des lettres, correspondant par exemple aux initiales des défauts, à des symboles ou à des dessins. Pour certaines applications, il peut être envisagé d'inscrire les marques en clair, c'est-à-dire directement compréhensibles par un opérateur.

Selon une autre caractéristique de l'objet de l'invention, le poste de vision **1** est adapté pour repérer la position de chaque emballage avançant dans un même pas. Dans l'exemple illustré, le poste de vision **1** est apte à déterminer la position des huit emballages, à chaque pas d'avance. Cette information est transmise au poste de marquage **6** qui est à même d'apposer sur chaque emballage, une marque correspondant à la position des emballages dans chaque pas d'avance. De préférence, cette position est codée en binaire par des points de poids différents. La connaissance de la position des emballages dans chaque pas d'avance permet en corrélant l'information avec le type de défaut, de remonter à l'origine du défaut. Par exemple, si les emballages n° 1 de plusieurs pas successifs sont détectés vides, il peut être estimé que le système d'alimentation en produits de l'emballage n° 1 est défectueux.

L'invention n'est pas limitée aux exemples décrits et représentés car diverses modifications peuvent y être apportées sans sortir de son cadre.

## Revendications

1. **-** Machine thermoformeuse pour le conditionnement de produits **(3)** par des emballages **(2)** obtenus à partir d'un film **(22)** et obturés par un film soudé **(25)**, la machine **(20)** comportant successivement, selon le sens **(D)** de transport des emballages assuré par des moyens de convoyage **(34),** au moins un poste de conditionnement **(5),** un poste de soudage **(24),** un poste de marquage **(6)** et un poste de dégroupage des emballages **(27) caractérisée en ce qu'**un poste de vision **(1)** est placé entre le poste de soudage **(24)** et le poste de marquage **(6),** le poste de vision comportant des moyens **(31)** de prise d'images de l'emballage synchronisés sur l'avance des moyens de convoyage **(34)** et des moyens **(11)** pour piloter le poste de marquage **(6),** de manière qu'après avoir déterminé si les emballages respectent ou non des critères, le poste de vision (**1**) est configuré pour transférer le resultat au poste de marquage **(6)** afin d'apposer sur les emballages **(2)** des marques **(M)** en fonction du respect ou non des critères, et **en ce que** les moyens de convoyage (**34**) sont adaptés pour maintenir les emballages **(2)** par les deux bords longitudinaux des deux films superposés **(22, 25).**

2. **-** Machine de conditionnement selon la revendication 1, **caractérisée en ce que** le poste de vision (**1**) est configuré pour assurer le contrôle optique pour un groupe d'emballages avançant d'un pas déterminé en fonction du conditionnement des produits.

3. **-** Machine de conditionnement selon la revendication 2, **caractérisée en ce que** le pas d'avance de la machine est adapté pour être égal à une longueur comportant une série d'emballages **(2).**

4. **-** Machine de conditionnement, selon la revendication 1, **caractérisée en ce que** le poste de marquage **(6)** est configuré pour assurer le marquage d'au moins la date limite de consommation et des marques (**M**) en fonction du respect ou non des critères.

5. **-** Machine de conditionnement, selon la revendication 1, **caractérisée en ce que** le poste de marquage (**6**) est configuré pour apposer sur les emballages **(2),** des marques (**M**) relevant de une ou de plusieurs catégories différentes correspondant chacune à des critères différents à respecter.

6. - Machine de conditionnement selon la revendication 1, **caractérisée en ce que** le poste de marquage (**6**) est configuré pour assurer le marquage sur les emballages (**2**), en tant qu'informations, au moins des dates limites de consommation à proximité desquelles sont apposées les marques **(M)** significatives du respect ou non des critères.

7. - Machine de conditionnement selon l'une des revendications 1 à 6, **caractérisée en ce que** le poste de marquage **(6)** est configuré pour apposer des marques **(M)** codées non directement compréhensibles en l'absence d'une table de correspondance entre lesdites marques codées et le respect ou non des critères.

8. - Machine de conditionnement selon la revendication 7, **caractérisée en ce que** le poste de marquage **(6)** est configuré pour apposer en tant que marques codées **(M),** des traits de plus ou moins grandes longueurs.

9. - Machine de conditionnement selon l'une des revendications 5 à 8, **caractérisée en ce que** le poste de marquage **(6)** est configuré pour apposer des marques **(M)** directement compréhensibles.

10. **-** Machine de conditionnement selon l'une des revendications 1 à 9, **caractérisée en ce que** le poste de vision **(1)** est configuré pour assurer un contrôle optique des emballages **(2)** de manière à déterminer si les emballages respectent ou non en tant que critères, la présence d'intrus dans les soudures de l'emballage, l'aspect du produit, l'aspect de l'emballage et/ou la présence du produit à l'intérieur de l'emballage.

11. **-** Machine de conditionnement selon la revendication 10, **caractérisée en ce que** le poste de marquage (**6**) est configuré pour assurer pour chaque pas d'avance des emballages **(2),** un contrôle optique des emballages de manière à attribuer à chaque emballage, un code représentatif de sa position.

12. - Machine de conditionnement selon l'une des revendications 1 à 11, **caractérisée en ce que** le poste de marquage **(6)** est suivi d'un poste de tri **(7)** des emballages à partir des marques apposées sur les emballages et en fonction du respect ou non des critères.

13. **-** Machine de conditionnement selon la revendication 12, **caractérisée en ce que** le poste de tri **(7)** comporte des moyens de prises d'images des emballages pour détecter au moins les marques **(M),** les dates limites de consommation et la position des emballages, ces moyens de prises d'images pilotant un système de préhension des emballages adapté pour placer les emballages conformes dans une caisse de conditionnement et pour permettre aux emballages non-conformes de suivre une voie de traitement.

## Patentansprüche

1. Thermoformmaschine für das Verpacken von Produkten (3) mit Verpackungen (2), die aus einem Film (22) erhalten werden und durch einen verschweißten Film (25) verschlossen werden, wobei die Maschine (20) in der Richtung (D) des Transportierens der Verpackungen, das durch Beförderungsmittel (34) sichergestellt wird, nacheinander wenigstens eine Verpackungsstation (5), eine Schweißstation (24), eine Markierstation (6) und eine Station zum Aufteilen der Verpackungen (27) umfasst, **dadurch gekennzeichnet, dass** zwischen der Schweißstation (24) und der Markierstation (6) eine Sichtstation (1) angeordnet ist, wobei die Sichtstation Mittel (31) zur Aufnahme von Bildern der Verpackung, die mit dem Vorschub der Beförderungsmittel (34) synchronisiert sind, sowie Mittel (11) zur Steuerung der Markierstation (6) umfaßt, so dass, nachdem bestimmt wurde, ob die Verpackungen Kriterien erfüllen oder nicht, die Sichtstation (1) dazu ausgebildet ist, das Ergebnis an die Markierstation (6) zu übermitteln, um auf die Verpackungen (2) in Abhängigkeit des Erfüllens oder Nichterfüllens der Kriterien Markierungen (M) aufzubringen, und dass die Beförderungsmittel (34) dazu ausgelegt sind, die Verpackungen (2) über die beiden Längsränder der beiden übereinander liegenden Filme (22, 25) zu halten.

2. Verpackungsmaschine nach Anspruch 1, **dadurch gekennzeichnet, dass** die Sichtstation (1) dazu ausgebildet ist, die Sichtkontrolle für eine Gruppe von Verpackungen, die sich mit einem in Abhängigkeit von dem Verpacken der Produkte bestimmten Schritt vorwärtsbewegen, sicherzustellen.

3. Verpackungsmaschine nach Anspruch 2, **dadurch gekennzeichnet, dass** der Vorschubschritt der Maschine dazu ausgelegt ist, gleich einer Länge, die eine Reihe von Verpackungen (2) umfasst, zu sein.

4. Verpackungsmaschine nach Anspruch 1, **dadurch gekennzeichnet, dass** die Markierstation (6) dazu ausgebildet ist, das Kennzeichnen mit wenigstens dem Verfallsdatum und den Markierungen (M) in Abhängigkeit des Erfüllens oder Nichterfüllens der Kriterien sicherzustellen.

5. Verpackungsmaschine nach Anspruch 1, **dadurch gekennzeichnet, dass** die Markierstation (6) dazu ausgebildet ist, auf die Verpackungen (2) Markierungen (M), die zu einer oder mehreren unterschiedlichen Kategorien gehören, welche jeweils unterschiedlichen zu erfüllenden Kriterien entsprechen, aufzubringen.

6. Verpackungsmaschine nach Anspruch 1, **dadurch gekennzeichnet, dass** die Markierstation (6) dazu ausgebildet ist, die Kennzeichnung auf den Verpackungen (2) als Informationen wenigstens mit den Verfallsdaten, in deren Nähe die für das Erfüllen oder Nichterfüllen der Kriterien bezeichnenden Markierungen (M) aufgebracht sind, sicherzustellen.

7. Verpackungsmaschine nach einem der Ansprüche 1 bis 6, **dadurch gekennzeichnet, dass** die Markierstation (6) dazu ausgebildet ist, verschlüsselte Markierungen (M) aufzubringen, die bei Nichtvorliegen einer Tabelle der Entsprechungen zwischen den verschlüsselten Markierungen und dem Erfüllen oder Nichterfüllen der Kriterien nicht direkt verständlich sind.

8. Verpackungsmaschine nach Anspruch 7, **dadurch gekennzeichnet, dass** die Markierstation (6) dazu ausgebildet ist, als verschlüsselte Markierungen (M) mehr oder weniger lange Striche aufzubringen.

9. Verpackungsmaschine nach einem der Ansprüche 5 bis 8, **dadurch gekennzeichnet, dass** die Markierstation (6) dazu ausgebildet ist, direkt verständliche Markierungen (M) aufzubringen.

10. Verpackungsmaschine nach einem der Ansprüche 1 bis 9, **dadurch gekennzeichnet, dass** die Sichtstation (1) dazu ausgebildet ist, eine Sichtkontrolle der Verpackungen (2) sicherzustellen, um zu bestimmen, ob die Verpackungen das Vorliegen von Einschlüssen in den Schweißnähten der Verpackung, das Aussehen des Produktes, das Aussehen der Verpackung und/oder das Vorhandensein des Produktes in der Verpackung als Kriterien erfüllen oder nicht erfüllen.

11. Verpackungsmaschine nach Anspruch 10, **dadurch gekennzeichnet, dass** die Markierstation (6) dazu ausgebildet ist, für jeden Vorschubschritt der Verpackungen (2) eine Sichtkontrolle der Verpackungen sicherzustellen, um jeder Verpackung einen für seine Position repräsentativen Code zuzuweisen.

12. Verpackungsmaschine nach einem der Ansprüche 1 bis 11, **dadurch gekennzeichnet, dass** sich an die Markierstation (6) eine Station zum Sortieren (7) der Verpackungen anhand der auf die Verpackungen aufgebrachten Markierungen und in Abhängigkeit des Erfüllens oder Nichterfüllens der Kriterien anschließt.

13. Verpackungsmaschine nach Anspruch 12, **dadurch gekennzeichnet, dass** die Sortierstation (7) Mittel zur Aufnahme von Bildern der Verpackungen umfasst, um wenigstens die Markierungen (M), die Verfallsdaten und die Position der Verpackungen zu erfassen, wobei diese Bildaufnahmemittel ein System zum Greifen der Verpackungen steuern, das dazu ausgelegt ist, die ordnungsgemäßen Verpackungen in einen Verpackungskasten zu legen und den nicht ordnungsgemäßen Verpackungen zu ermöglichen, einem Bearbeitungsweg zu folgen.

## Claims

1. A blister-pack machine for the packaging of products (3) in packs (2) that are created from a film (22) and closed by a welded film (25), where the machine (20) successively includes, in the direction (D) of transportation of the packs led by the conveying means (34), at least one packaging station (5), one welding station (24), one marking station (6) and one pack separating station (27), **characterised in that** a viewing station (1) is placed between the welding station (24) and the marking station (6), with the viewing station including means (31) to take pictures of the pack, synchronised with the progression of the conveying means (34), and means (11) for controlling the marking station (6), so that after determining whether the packs are meeting the set criteria or not, the viewing station (1) is configured to transfer the result to the marking station (6) in order to place marks (M) onto the packs (2) according to compliance or not with the set criteria, and **in that** the conveying means (34) are adapted to hold the packs (2) by the two longitudinal edges of the two superimposed films (22, 25).

2. A packaging machine according to claim 1, **characterised in that** the viewing station (1) is configured to effect optical monitoring for an advancing group of packs at a given pitch according to the packaging of the products.

3. A packaging machine according to claim 2, **characterised in that** the progression pitch of the machine is adapted to be equal to a length that includes a series of packs (2).

4. A packaging machine according to claim 1, **characterised in that** the marking station (6) is configured to effect the marking of at least the "best before" date, and of marks (M) showing compliance or not with the set criteria.

5. A packaging machine according to claim 1, **characterised in that** the marking station (6) is configured to place onto the packs (2) marks (M) relating to one or more different categories, each corresponding to different criteria to be respected.

6. A packaging machine according to claim 1, **characterised in that** the marking station (6) is configured to effect the marking onto the packs (2), for information purposes, of at least the "best before" dates, close to which it places the marks (M) indicating compliance or not with the set criteria.

7. A packaging machine according to one of claims 1 to 6, **characterised in that** the marking station (6) is configured to place coded marks (M) that are not directly comprehensible in the absence of a table of correspondence between the said coded marks and compliance or not with the set criteria.

8. A packaging machine according to claim 7, **characterised in that** the marking station (6) is configured to place, as the coded marks (M), lines of greater or lesser length.

9. A packaging machine according to one of claims 5 to 8, **characterised in that** the marking station (6) is configured to place marks (M) that are directly comprehensible.

10. A packaging machine according to one of claims 1 to 9, **characterised in that** the viewing station (1) is configured to perform an optical check on the packs (2) so as to determine whether the packs respect the set criteria or not, regarding evidence of tampering with the welds on the pack, the appearance of the product, the appearance of the pack, and / or the presence of the product within the pack.

11. A packaging machine according to claim 10, **characterised in that**, at each forward step of the packs (2), the marking station (6) is configured to perform an optical check on the packs so as to attribute to each pack a code representing its position.

12. A packaging machine according to one of claims 1 to 11, **characterised in that** the marking station (6) is followed by a station (7) for sorting the packs, based on the marks placed on the packs and according to compliance or not with the set criteria.

13. A packaging machine according to claim 12, **characterised in that** the sorting station (7) includes means to take pictures of the packs, in order to detect at least the marks (M), the "best before" dates, and the position of the packs, with these picture-taking means then controlling a system for grasping the packs that is designed to place the good packs into a packing case, and to allow the bad packs to follow a processing track.
